# EUROPÄISCHE PATENTSCHRIFT

(11) **EP 4 090 864 B1**
(45) Veröffentlichungstag und Bekanntmachung des Hinweises auf die Patenterteilung: **27.12.2023**
(21) Anmeldenummer: 20807270.2
(22) Anmeldetag: 03.11.2020
(51) Int. Cl.: F16J 9/06, F16J 9/14

(54) **ÖLABSTREIFKOLBENRING**
OIL CONTROL RING
SEGMENT RACLEUR D'HUILE

(30) Priorität: 15.01.2020 DE 102020100764
(43) Veröffentlichungstag der Anmeldung: 23.11.2022
(73) Patentinhaber: Federal-Mogul Burscheid GmbH, 51399 Burscheid (DE)
(72) Erfinder: BASTUCK, Thomas, 40625 Düsseldorf (DE); KELLNER, Markus, 51375 Leverkusen (DE); HAAF, Eugen, 51373 Leverkusen (DE); BÄRENREUTER, Dirk, 51519 Odenthal (DE)
(74) Vertreter: Döpp, Ludger
(86) Internationale Anmeldenummer: PCT/DE2020/100934
(87) Internationale Veröffentlichungsnummer: WO 2021/143961

(56) Entgegenhaltungen:
- EP-A1- 3 492 782
- FR-A- 1 280 297

## Beschreibung

Die Erfindung betrifft einen mehrteiligen Ölabstreifkolbenring, gemäß gattungsbildendem Teil des ersten Patentanspruchs.

Mehrteilige Ölabstreifkolbenringe haben die Aufgabe, das Öl aus dem Kurbelgehäuse vor dem Eindringen in den Verbrennungsraum zu hindern.

Durch verschärfte Abgasverordnungen kommt insbesondere dem Thema "Partikelemission" verstärkte Bedeutung zu. Es wird davon ausgegangen, dass in den Brennraum eindringendes Öl durch unsaubere Verbrennung zu einem großen Anteil an der Partikelemission beteiligt ist. Durch Versuche konnte nachgewiesen werden, dass im Schubbetrieb durch Unterdruck im Brennraum verstärkt Öl aus dem Kurbelgehäuse in Richtung der Brennkammer gesaugt wird.

Die WO 2013/004217 A2 offenbart einen Ölabstreifring für einen Kolben eines Verbrennungsmotors, bestehend aus mindestens einer Lamelle mit jeweils einem Stoß und aus einer mäanderförmigen Distanzfeder mit einem Stoß, wobei die mindestens eine Lamelle und die Distanzfeder miteinander in Kontakt stehen. Der Stoß der mindestens eine Lamelle schließt mit dem Radius der mindestens einen Lamelle einen spitzen Winkel ein. Vorzugsweise beinhaltet dieser Ölabstreifring zwei parallel zueinander verlaufende Lamellen, zwischen denen die Distanzfeder angeordnet wird, wobei eine jede Lamelle einen Stoß aufweist.

Durch die US 2,469,959 A ist ein Kolbenring, insbesondere ein Ölabstreifkolbenring bekannt geworden, beinhaltend zwei Lamellen, deren Stöße in überlappender Form vorgesehen sind sowie eine dazwischen angeordnete Distanzfeder.

Die FR 1280297 A betrifft einen mehrteiligen Ölabstreifkolbenring, beinhaltend ein geschlitztes Federelement und mindestens ein damit in Wirkverbindung stehendes, mit einem Stoß versehenes, Lamellenelement. Das Federelement ist als Mäanderfeder ausgebildet. Mindestens eines der Stoßenden greift in eine im Kolben vorgesehene Ausnehmung ein.

Durch die EP 3 492 782 A1 ist ein gattungsgemäßer mehrteiliger Ölabstreifkolbenring bekannt geworden. Einer der Schenkel des Stoßbereichs des Federelements ragt in den Stoß des Lamellenelements hinein.

Ziel des Erfindungsgegenstandes ist es, einen Ölabstreifkolbenring bereitzustellen, bei welchem weitestgehend verhindert wird, dass Öl aus dem Kurbelgehäuse in den Verbrennungsraum gelangen kann, so dass Partikelemissionen verringert werden können.

Dieses Ziel wird dadurch erreicht, dass die Schenkel (9,10) etwa parallel zueinander verlaufen und, dass die Dicke (d) beider Schenkel (9,10) der Mäanderfeder (2) geringer als die Stoßweite (a) des Lamellenelements (3) ausgebildet ist, so dass unter Beibehaltung der Tangentialkraft des Lamellenelements (3) die aneinanderliegenden Schenkel (9,10) mit definiertem Spiel innerhalb des Stoßes (7) des Lamellenelements (3) geführt sind.

Vorteilhafte Weiterbildungen des Erfindungsgegenstandes sind den Unteransprüchen zu entnehmen.

Die axiale Länge der Schenkel der Mäanderfeder ist hierbei so vorgesehen, dass die Schenkelenden der Schenkel etwa auf Höhe der oberen Flanke des Lamellenelements enden.

Einem weiteren Gedanken der Erfindung gemäß, wirkt die Mäanderfeder mit einem oberen, einem Brennraum zugewandten und einem unteren, einem Ölraum zugewandten Lamellenelement zusammen, wobei die Schenkel der Mäanderfeder in den Stoß des oberen Lamellenelements eingreifen.

Vorteilhafterweise sind die Schenkel der Mäanderfeder mit definiertem Spiel innerhalb des Stoßes des Lamellenelements geführt.

Einem weiteren Gedanken der Erfindung gemäß wird vorgeschlagen, dass die Dicke beider Schenkel der Mäanderfeder geringer als die Stoßweite des Lamellenelements ausgebildet ist, so dass unter Beibehaltung der Tangentialkraft des Lamellenelements die aneinanderliegenden Schenkel mit definiertem Spiel (in Umfangsrichtung gesehen) innerhalb des Stoßes des Lamellenelements geführt sind.

Die erfindungsgemäße Neugestaltung des Ölabstreifrings sieht vor, die Enden der Mäanderfeder in axialer Richtung länger auszuführen, so dass diese in den vorhandenen Zwischenraum der Stoßenden eines Lamellenelements, vorzugsweise des dem Brennraum zugewandten Lamellenelements mit definiertem Spiel eingreifen. Auf diese Weise wird der offene Stoß des Lamellenelements als mögliche Ölpassage blockiert. Somit gelangt weniger Öl aus dem Kurbelraum in Richtung des Verbrennungsraums, so dass auch Partikelemissionen reduziert werden können.

Der Erfindungsgegenstand ist anhand eines Ausführungsbeispiels in der Zeichnung dargestellt und wird wie folgt beschrieben. Es zeigen:
- Figur 1: Ölabstreifkolbenring gemäß Stand der Technik in verschiedenen Ansichten bzw. Schnitten;
- Figur 2: Prinzipskizze eines erfindungsgemäßen Ölabstreifkolbenrings in verschiedenen Ansichten bzw. Schnitten;
- Figur 3: Vergrößerte Darstellung des abzudichtenden Stoßbereichs des Lamellenrings gemäß Figur 2.

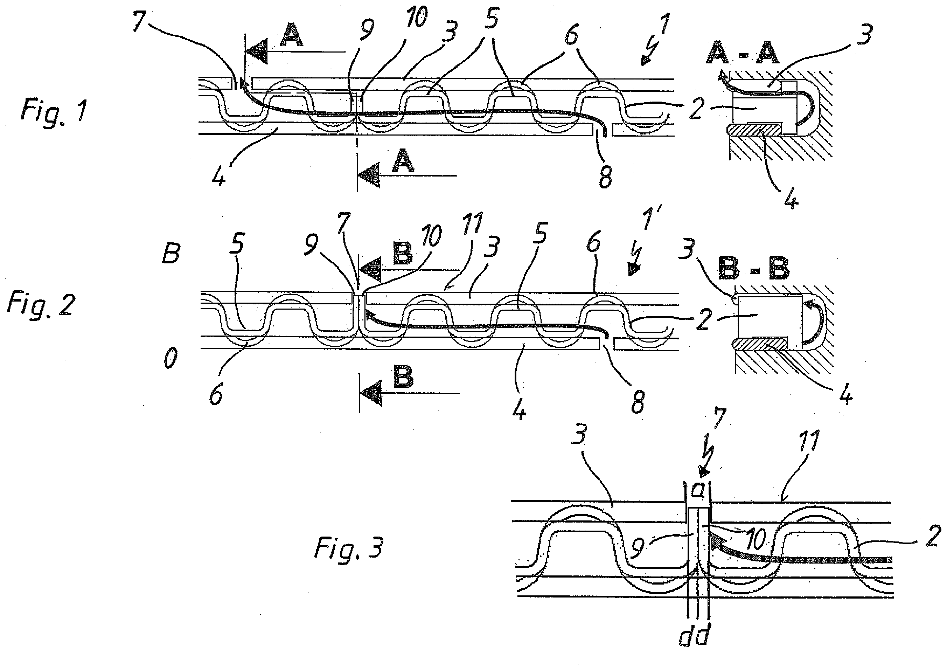

Figur 1 zeigt einen Ölabstreifkolbenring 1 gemäß Stand der Technik in verschiedenen Ansichten bzw. Schnitten. Der Ölabstreifkolbenring 1 beinhaltet eine Mäanderfeder 2 sowie zwei Lamellenelemente 3,4. Die Mäanderfeder 2 ist so ausgestaltet, dass einerseits axiale Aufnahmebereiche 5 für das jeweilige Lamellenelement 3,4 und andererseits radiale Abstützbereiche 6 für das jeweilige Lamellenelement 3,4 gebildet werden. Ein jedes Lamellenelement 3,4 ist mit einem Stoß 7,8 versehen. Die Mäanderfeder 2 ist geschlitzt ausgebildet und weist stoßseitig zwei etwa parallel zueinander verlaufende Schenkel 9,10 auf, die mit definiertem Abstand zum oberen Lamellenelements 3 vorgesehen sind.

Figur 2 zeigt den erfindungsgemäßen Ölabstreifkolbenring 1'. Gleiche Bauteile sind mit gleichen Bezugszeichen versehen. Erkennbar ist die Mäanderfeder 2 sowie die Lamellenelemente 3,4. Erfindungsgemäß sind die Schenkel 9,10 so lang ausgebildet, dass sie in den Stoß 7 des oberen Lamellenelements 3, zumindest teilweise, mit definiertem Spiel hineinragen. Die Länge der Schenkel 9,10 kann maximal so ausgestaltet werden, dass deren Enden etwa auf der Höhe der Flanke 11 des oberen Lamellenelements 3 liegen.

Das Lamellenelement 3 soll hierbei einem nicht dargestellten Brennraum B und das Lamellenelement 4 einem ebenfalls nicht dargestellten Ölraum O zugewandt sein.

Während bei der Darstellung gemäß Figur 1 ein Ölfluss über den Stoß 8 die Mäanderfeder 2 und den Stoß 7 des Lamellenelements 3 in Richtung des Brennraums B möglich ist, wird durch die in den Stoß 7 gemäß Figur 2 eingreifenden Schenkeln 9,10 der Mäanderfeder 2 ein dichtender Verschluss gebildet, durch welchen der axiale Öldurchfluss weitestgehend blockiert wird (s. Pfeile der Figuren 1 und 2).

Figur 3 zeigt in vergrößerter Darstellung den abgedichteten Bereich des oberen Lamellenelements 3 gemäß Figur 2. Erkennbar sind die beiden Schenkel 9,10 der Mäanderfeder 2. Der Stoß 7 des Lamellenelements 3 hat eine vorgebbare Stoßweite a. Die Schenkel 9,10 weisen gleiche Dicken d auf und liegen plan aneinander. Das axiale Ende der Schenkel 9,10 soll in diesem Beispiel unterhalb der Flanke 11 des oberen Lamellenelements 3 vorgesehen sein. Um einerseits ein Klemmen der Schenkel 9,10 innerhalb des Stoßes 7 zu vermeiden und andererseits die Tangentialkraft des Lamellenelements 3 nicht zu beeinträchtigen, sind die beiden Schenkel 9,10 des Lamellenelements mit definiertem Spiel (in Umfangsrichtung gesehen) innerhalb der Stoßweite a des Stoßes 7 positioniert. Hierbei kann eine bei Wellen gebräuchliche Spielpassung angenommen werden. Da Kolbenringe für unterschiedliche Anwendungen mit unterschiedlichen Durchmessern ausgeführt werden, sind die jeweiligen Spielpassungen in entsprechender Weise anzupassen.

### Bezugszeichenliste

- 1: Ölabstreifkolbenring
- 1: Ölabstreifkolbenring
- 2: Mäanderfeder
- 3: Lamellenelement
- 4: Lamellenelement
- 5: Aufnahmebereich
- 6: Abstützbereich
- 7: Stoß (Lamellenelement)
- 8: Stoß (Lamellenelement)
- 9: Schenkel (Mäanderfeder)
- 10: Schenkel (Mäanderfeder)
- 11: Flanke oberes Lamellenelement

- a: Stoßweite
- d: Dicke Schenkel

## Patentansprüche

1. Mehrteiliger Ölabstreifkolbenring, beinhaltend ein geschlitztes Federelement (2) und mindestens ein damit in Wirkverbindung stehendes, mit einem Stoß (7,8) versehenes Lamellenelement (3,4), wobei das Federelement (2) als das Lamellenelement (3,4) einerseits axial aufnehmende und andererseits radial abstützende Mäanderfeder ausgebildet ist, wobei die beiden Endbereiche der Mäanderfeder (2) mit Schenkeln (9,10) versehen sind, deren axiale Länge so ausgestaltet ist, dass die Schenkel (9,10) zumindest teilweise in den Stoß (7,8) des Lamellenelements (3,4) eingreifen, **dadurch gekennzeichnet, dass** die Schenkel (9,10) etwa parallel zueinander verlaufen und, dass die Dicke (d) beider Schenkel (9,10) der Mäanderfeder (2) geringer als die Stoßweite (a) des Lamellenelements (3) ausgebildet ist, so dass unter Beibehaltung der Tangentialkraft des Lamellenelements (3) die aneinanderliegenden Schenkel (9,10) mit definiertem Spiel innerhalb des Stoßes (7) des Lamellenelements (3) geführt sind.

2. Ölabstreifkolbenring nach Anspruch 1, **dadurch gekennzeichnet, dass** die axiale Länge der Schenkel (9,10) so vorgesehen ist, dass die Schenkelenden der Schenkel (9,10) etwa auf Höhe der oberen Flanke (11) des Lamellenelements (3,4) enden.

3. Ölabstreifkolbenring nach Anspruch 1 oder 2, **dadurch gekennzeichnet, dass** die Mäanderfeder (2) mit einem oberen, einem Brennraum (B) zugewandten und einem unteren, einem Ölraum (O) zugewandten Lamellenelement (3,4) zusammenwirken, wobei die Schenkel (9,10) der Mäanderfeder (2) in den Stoß (7) des oberen Lamellenelements (3) eingreifen.

4. Ölabstreifkolbenring nach einem der Ansprüche 1 bis 3, **dadurch gekennzeichnet, dass** die Schenkel (9,10) der Mäanderfeder (2) mit definiertem Spiel innerhalb des Stoßes (7) des Lamellenelements (3) geführt sind.

## Claims

1. A multi-piece oil control ring, including a slotted spring element (2) and at least one lamella element (3, 4) being operatively connected to said slotted spring element and provided with a joint (7, 8), wherein the spring element (2) is formed as meander spring, which, on the one hand, axially receives and, on the other hand, radially supports the lamella element (3, 4), wherein the two end regions of the meander spring (2) are provided with legs (9, 10), the axial length of which is designed so that the legs (9, 10) engage at least partially with the joint (7, 8) of the lamella element (3, 4), **characterized in that** the legs (9, 10) run approximately parallel to one another and that the thickness (d) of both legs (9, 10) of the meander spring (2) is smaller than the joint width (a) of the lamella element (3), so that the legs (9, 10) which bear on one another are guided with defined play within the joint (7) of the lamella element (3) by maintaining the tangential force of the lamella element (3).

2. The oil control ring according to claim 1, **characterized in that** the axial length of the legs (9, 10) is provided so that the leg ends of the legs (9, 10) end approximately at the height of the upper flank (11) of the lamella element (3, 4).

3. The oil control ring according to claim 1 or 2, **characterized in that** the meander spring (2) cooperate with an upper lamella element (3, 4) facing a combustion chamber (B) and with a lower lamella element (3, 4) facing an oil chamber (O), wherein the legs (9, 10) of the meander spring (2) engage with the joint (7) of the upper lamella element (3).

4. The oil control ring according to one of claims 1 to 3, **characterized in that** the legs (9, 10) of the meander spring (2) are guided with defined play within the joint (7) of the lamella element (3).

## Revendications

1. Segment de piston racleur d'huile en plusieurs parties, contenant un élément de ressort fendu (2) et au moins un élément lamellaire (3, 4) raccordé fonctionnellement à celui-ci, pourvu d'un dispositif de butée (7, 8) est prévu, dans lequel l'élément élastique (2) est conçu comme un ressort à méandres qui, d'une part, reçoit axialement l'élément lamellaire (3, 4) et d'autre part le supporte radialement, dans lequel les deux zones d'extrémité du ressort à méandres (2) sont également dotées de pattes (9, 10) dont la longueur axiale est conçue de telle sorte que les pattes (9, 10) s'engagent au moins partiellement dans le dispositif de butée (7, 8) de l'élément à lamelles (3, 4), **caractérisé en ce que** les pattes (9, 10) sont approximativement parallèles les unes aux autres et que l'épaisseur (d) des deux pattes (9, 10) du ressort sinueux (2) est conçue inférieure à la largeur de butée (a) de l'élément lamellaire (3) de telle sorte que, tout en maintenant la force tangentielle de l'élément lamellaire (3), les pattes adjacentes (9, 10) soient guidées avec un jeu défini dans le dispositif de butée (7) de l'élément lamellaire (3).

2. Segment de piston racleur d'huile selon la revendication 1, **caractérisé en ce que** la longueur axiale des pattes (9, 10) est prévue de telle sorte que les extrémités des pattes (9, 10) se trouvent approximativement au niveau du flanc supérieur (11) de l'élément de disque (3, 4).

3. Segment de piston racleur d'huile selon la revendication 1 ou 2, **caractérisé en ce que** le ressort à méandres (2) coopère avec un élément lamellaire supérieur (3, 4) en regard d'une chambre de combustion (B) et un élément lamellaire inférieur (3, 4) face à une chambre à huile (0), dans lequel les pattes (9, 10) du ressort à méandre (2) s'engagent dans le dispositif de butée (7) de l'élément lamellaire supérieur (3).

4. Segment de piston racleur d'huile selon une des revendications 1 à 3, **caractérisé en ce que** les pattes (9, 10) du ressort à méandres (2) sont guidées avec un jeu défini à l'intérieur du dispositif de butée (7) de l'élément lamellaire (3).
